# FASCICULE DE BREVET EUROPEEN

(11) **EP 2 571 759 B1**
(45) Date de publication et mention de la délivrance du brevet: **12.04.2017**
(21) Numéro de dépôt: 11726871.4
(22) Date de dépôt: 16.05.2011
(51) Int. Cl.: B64C 25/12

(54) **TRAIN D'ATTERRISSAGE MONTÉ SOUS UNE AILE D'AÉRONEF**
FLUGZEUGFAHRWERK, AM FLÜGEL MONTIERT
WING-MOUNTED LANDING GEAR

(30) Priorité: 19.05.2010 FR 1053885
(43) Date de publication de la demande: 27.03.2013
(73) Titulaire: Airbus Operations SAS, 31060 Toulouse (FR)
(72) Inventeur: DE CONTO, Sébastien, F-31503 Bretx (FR); CASTANET, Marc-Antoine, F-31830 Plaisance-du-touch (FR)
(74) Mandataire: Gevers & Orès
(86) Numéro de dépôt international: PCT/FR2011/051085
(87) Numéro de publication internationale: WO 2011/144850

(56) Documents cités:
- EP-A1- 0 031 601
- WO-A1-00/59781
- WO-A1-01/19672
- FR-A1- 2 800 704
- FR-A1- 2 800 705

## Description

La présente invention concerne un aéronef comportant, sous chacune de ses ailes, au moins un train d'atterrissage.

On sait que les avions de transport civil ou militaire comportent un fuselage et deux ailes, disposées symétriquement par rapport à ce dernier. Chaque aile comprend un ou plusieurs longerons longitudinaux reliés à un caisson de voilure faisant partie de la structure dudit fuselage et sous chacune des ailes est généralement monté au moins un train d'atterrissage escamotable qui comporte de façon connue :
- une jambe qui est apte à pivoter, à son extrémité supérieure, autour d'un axe de rotation pour occuper au moins une position déployée et une position escamotée et qui est pourvue de roues à son extrémité inférieure, ladite jambe étant reliée, à son extrémité supérieure, à un longeron longitudinal arrière de l'aile ; et
- au moins une contrefiche avant inclinée reliée, à son extrémité inférieure, à ladite jambe et, à son extrémité supérieure audit longeron longitudinal arrière de l'aile par l'intermédiaire d'une ferrure.

On sait en outre que, pour réduire la masse en carburant des avions modernes, ces derniers peuvent être pourvus d'une voilure réalisée en matériau composite formé de plis superposés.

Cependant, en vol, les ailes subissent principalement un moment de flexion d'axe X-X parallèle à l'axe longitudinal du fuselage de l'avion, qui résulte de l'application de forces aérodynamiques sur toute leur surface. Aussi, pour résister à ce moment de flexion, le laminé d'une aile en matériau composite est principalement constitué de plis orientés selon une direction Y-Y qui est orthogonale à l'axe X-X et qui correspond au sens privilégié de ladite aile.

Toutefois, une telle orientation du laminé ne peut être optimisée pour supporter des efforts locaux selon une autre direction Z-Z orthogonale, d'une part, à l'axe X-X et, d'autre part, à l'axe Y-Y.

Aussi, pour rependre les efforts engendrés par un train d'atterrissage du type précité, il est nécessaire de renforcer localement la structure de l'aile en ajoutant des plis supplémentaires. Un tel renfort local s'amincit dès lors que l'on s'éloigne du point d'application de l'effort suivant les axes Z-Z, X-X et Y-Y, selon des lois de décroissance prédéfinies.

Cependant, le point de liaison entre la contre-fiche avant et le longeron arrière de l'aile est trop proche du caisson de voilure pour que l'on puisse appliquer les lois de décroissances précitées. Ainsi, ce surcroît de rigidité engendre des efforts de traction et/ou de compression dans le plan formé par les axes Y-Y et Z-Z et la structure avoisinant ledit point de liaison doit être dimensionnée (par exemple par une augmentation des épaisseurs du longeron au point de liaison) pour reprendre des efforts tranchants. Cela provoque une augmentation de masse indésirable.

La présente invention a pour objet de remédier à l'inconvénient mentionné ci-dessus.

A cette fin, l'aéronef selon l'invention comprenant un train d'atterrissage escamotable, un fuselage et des ailes qui comportent chacune au moins un longeron longitudinal relié à un caisson de voilure faisant partie de la structure dudit fuselage, ledit train d'atterrissage comportant :
- une jambe qui est apte à pivoter, à son extrémité supérieure, autour d'un axe de rotation pour occuper au moins une position déployée et une position escamotée et qui est pourvue, à son extrémité inférieure, de moyens de roulement, ladite jambe étant reliée, à son extrémité supérieure, audit longeron longitudinal de ladite aile ; et
- au moins une contrefiche avant inclinée reliée, à son extrémité inférieure, à ladite jambe, et reliée, à son extrémité supérieure, à ladite structure du fuselage par l'intermédiaire de moyens de liaison, est remarquable en ce que lesdits moyens de liaison comprennent un palier glissant monté sur ladite case de train et traversé par au moins une partie de l'extrémité supérieure de ladite contrefiche.

Ainsi, grâce à l'invention, l'extrémité supérieure de la contre-fiche avant est reliée à la structure du fuselage (et non plus à la voilure) dans une zone déjà dimensionnée pour reprendre des efforts dans le plan formé par les axes X-X et Z-Z. Le renfort de la structure de la voilure de l'avion (notamment le dimensionnement des structures avoisinantes pour la reprise des efforts locaux venant de la contrefiche) n'est plus indispensable, de sorte que l'on évite l'augmentation de masse indésirable correspondante.

On notera que la demande internationale WO01/19672A1 décrit un train d'atterrissage monté sous une aile d'aéronef comprenant un contrefiche avant relié, à son extrémité supérieure, à la structure du fuselage par des moyens de liaison sous la forme d'attaches. Ainsi, WO01/19672A1 ne divulgue pas de palier glissant, traversé par au moins une partie de l'extrémité supérieure de la contrefiche.

En outre, la structure dudit fuselage comportant une case de train destinée à recevoir ledit train d'atterrissage lorsqu'il occupe la position escamotée, ledit palier glissant peut être monté sur ladite case de train.

De plus, lesdits moyens de liaison comprennent, de préférence, au moins une ferrure, montée sur ledit caisson de voilure et à laquelle est fixée l'extrémité supérieure de ladite contrefiche traversant ledit palier glissant.

De préférence, l'extrémité supérieure de ladite contrefiche comporte un tourillon apte à traverser, au moins partiellement, ledit palier glissant et à être fixé, à l'une des ses extrémités, à ladite ferrure. On réalise ainsi un contact glissant au niveau du palier glissant, de sorte que les efforts de traction et/ou de compression engendrés par ladite contre-fiche avant, selon la direction Y-Y orthogonal à l'axe longitudinal du fuselage, sont transférés sur la partie arrière du caisson de voilure par la ferrure fixée sur ce dernier. En outre, dans le cas d'un aéronef dont les ailes sont, au moins en partie, formées en matériau composite, la reprise des efforts durant les phases de freinage est effectuée par le caisson de voilure qui est capable de recevoir des niveaux d'efforts comparables à ce que peut transmettre une contre-fiche de train, du fait qu'il est déjà dimensionné pour supporter des charges en vol au moins équivalentes aux efforts de la contrefiche.

Par ailleurs, la présente invention concerne également un aéronef qui comporte, sous chacune de ses ailes, au moins un train d'atterrissage tel que décrit ci-dessus.

En outre, l'aéronef comprenant un fuselage et des ailes comportant chacune au moins un longeron longitudinal relié à un caisson de voilure faisant partie de la structure dudit fuselage, ledit longeron est de préférence agencé dans la partie arrière de ladite aile.

De plus, les ailes dudit aéronef sont avantageusement réalisées en matériau composite.
Les figures du dessin annexé feront bien comprendre comment l'invention peut être réalisée. Sur ces figures, des références identiques désignent des éléments semblables.
La figure 1 montre, dans une vue de dessus schématique partiellement écorchée, un train d'atterrissage usuel monté sous une aile d'avion.
La figure 2 est une vue schématique partielle en perspective du train d'atterrissage usuel de la figure 1.
La figure 3 montre, dans une vue de dessus schématique partiellement écorchée, un train d'atterrissage, conforme à la présente invention, monté sous une aile d'avion.
La figure 4 représente de façon schématique les moyens de liaisons de la contre-fiche avant du train d'atterrissage de la figure 3 à la structure du fuselage de l'avion, conformément à l'invention.

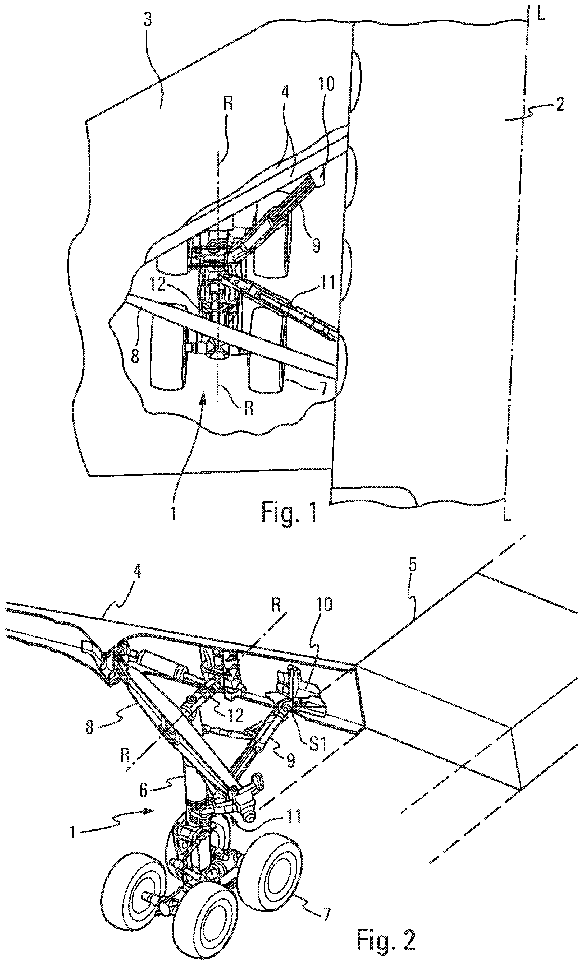

Sur les figures 1 et 2, on a représenté un train d'atterrissage 1 usuel monté sous une aile d'avion de transport, civil ou militaire. Ce dernier comprend un fuselage 2 et deux ailes 3 formées en matériau composite, par exemple à plis superposés principalement orientés selon une direction Y-Y orthogonale à l'axe longitudinal L-L du fuselage 2.

Chaque aile 3 comporte plusieurs longerons longitudinaux 4, dont un est agencé dans la partie arrière de l'aile 3. Les longerons longitudinaux 4 sont reliés à un caisson de voilure 5 faisant partie intégrante de la structure du fuselage 2.

Le train d'atterrissage 1 comporte de façon usuelle :
- une jambe 6 qui est apte à pivoter, à son extrémité supérieure, autour d'un axe de rotation R-R pour occuper au moins une position déployée et une position escamotée et qui est pourvue de roues 7, à son extrémité inférieure ;
- une poutre de train 8 reliée, à une de ses deux extrémités, au longeron longitudinal arrière 4 et, à son autre extrémité, de la structure du fuselage 2 ;
- une contrefiche avant inclinée 9 reliée, à son extrémité inférieure, à ladite jambe 6 et, à son extrémité supérieure, au longeron longitudinal arrière 4 au moyen d'une ferrure 10 ; et
- une contrefiche arrière inclinée 11 reliée, à son extrémité inférieure, à la jambe 6 du train 1 et, à son extrémité supérieure, à la poutre de train 8, au niveau de l'extrémité de ladite poutre 8 qui est liée à la structure du fuselage 2.

En outre, l'extrémité supérieure de la jambe 6 comporte un arbre de rotation 12, dont l'axe longitudinal correspond à l'axe de rotation R-R, sensiblement orthogonal à l'axe longitudinal de la jambe 6. Cet arbre 12 est monté rotatif, à une de ses extrémités, au longeron longitudinal arrière 4 et, à son autre extrémité, à la poutre de train 8.

Tel qu'indiqué précédemment, du fait de l'orientation selon la direction principale Y-Y des plis du matériau composite des ailes 3, ces dernières ne peuvent supporter de façon optimale des efforts locaux appliqués par la contrefiche 9.

Aussi, pour rependre les efforts du train d'atterrissage 1, il est nécessaire de renforcer localement la structure des ailes 3 en ajoutant des plis supplémentaires. Un tel renfort local s'amincit dès lors que l'on s'éloigne du point d'application de l'effort suivant les axes Z-Z, Y-Y et X-X, selon des lois de décroissance prédéfinies.

Cependant, le point de liaison S1 entre la contre-fiche avant 9 et le longeron arrière 4 d'une aile 3 est trop proche du caisson de voilure 5 pour que l'on puisse atteindre l'épaisseur optimale. Ainsi, ce surcroît de rigidité engendre des efforts de traction et/ou de compression dans le plan formé par les axes Y-Y et Z-Z, de sorte que les épaisseurs de la structure avoisinant ledit point S1 doivent être dimensionnées pour reprendre cette augmentation des efforts. En particulier, il est indispensable d'augmenter considérablement les épaisseurs du longeron longitudinal arrière 4 au droit du point de liaison S1, ce qui augmente sensiblement la masse totale de l'avion.

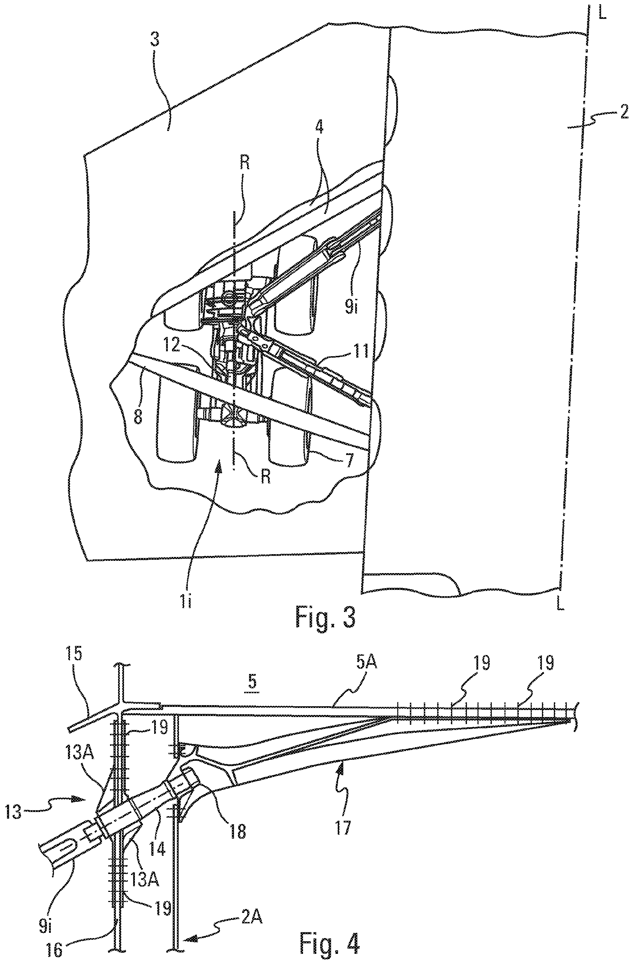

Ainsi, comme le montrent les figures 3 et 4, pour réduire les efforts exercés sur le longeron longitudinal arrière 4 (et éviter une augmentation de masse indésirable), la contre-fiche avant inclinée 9i d'un train d'atterrissage 1i conforme à l'invention est reliée, par des moyens de liaison 13 et 17, à la structure 2A, 16, 5A du fuselage 2 et, non plus, au longeron longitudinal arrière 4 de l'aile 3 (les autres éléments du train d'atterrissage 1i de l'invention étant inchangés par rapport au train d'atterrissage 1 illustré sur les figures 1 et 2).

Tel que représenté sur la figure 4, les moyens de liaison comportent :
- un palier glissant 13 en une ou plusieurs parties, traversé par une partie d'un tourillon 14 formant l'extrémité supérieure de la contrefiche avant 9i. Le palier glissant 13 est monté, à l'arrière de la croix verticale arrière 15 du caisson de voilure 5, sur la case de train 16 destinée à recevoir le train d'atterrissage 1i lorsqu'il occupe la position escamotée et faisant partie de la structure du fuselage 2. Dans l'exemple de la figure 4, ce palier glissant 13 comporte deux pièces 13A complémentaires fixées de part et d'autre d'une partie de la structure 2A du fuselage 2 ; et
- une ferrure 17, montée sur le caisson de voilure 5 et à laquelle est fixée l'extrémité supérieure de la contrefiche avant 9i (c'est-à-dire l'extrémité du tourillon 14) traversant le palier glissant 13, par exemple au moyen d'un écrou 18.

Ainsi, un contact glissant rotatif existe entre le tourillon 14 de la contre-fiche avant 9i et le palier glissant 13, de sorte que les efforts de traction et/ou de compression engendrés par ladite contre-fiche avant 9i, selon la direction Y-Y, sont transférés sur le longeron arrière 5A du caisson de voilure 5, par l'intermédiaire de la ferrure 17 fixée sur ce dernier.

Par ailleurs, sur la figure 4, on a représenté, de façon symbolique par un trait 19, chacun des moyens de fixation (par exemple des rivets) du palier glissant 13 à la structure du fuselage 2 et ceux de la ferrure 17 au caisson de voilure 5.

Il est à noter que, grâce à la présente invention, on réduit également les efforts s'exerçant sur la poutre de train 8 par l'arbre 12, ce qui autorise un allègement de celle-ci.

Par ailleurs, il est bien évident que la présente invention s'applique également à des avions dont les ailes ne seraient pas formées en matériau composite.

## Revendications

1. Aéronef comportant au moins un train d'atterrissage (1 i) escamotable, l'aéronef comprenant un fuselage (2), dont la structure (2A) comporte une case de train (16) destinée à recevoir ledit train d'atterrissage lorsque celui-ci est escamoté, et des ailes (3), qui comportent chacune au moins un longeron longitudinal (4) relié à un caisson de voilure (5) faisant partie de la structure dudit fuselage (2), ledit train d'atterrissage comportant :
- une jambe (6) qui est apte à pivoter, à son extrémité supérieure, autour d'un axe de rotation (R-R) pour occuper au moins une position déployée et une position escamotée et qui est pourvue, à son extrémité inférieure, de moyens de roulement (7), ladite jambe (6) étant reliée, à son extrémité supérieure, audit longeron longitudinal (4) de la dite aile (3) ; et
- au moins une contrefiche avant (9i) inclinée reliée, à son extrémité inférieure, à ladite jambe (6), et reliée, à son extrémité supérieure, à ladite structure du fuselage (2) par l'intermédiaire de moyens de liaison (13, 17),
**caractérisé en ce que** lesdits moyens de liaison comprennent un palier glissant (13) monté sur ladite case de train (16) et traversé par au moins une partie de l'extrémité supérieure de ladite contrefiche (9i).

2. Aéronef selon la revendication 1,
**caractérisé en ce que** lesdits moyens de liaison comprennent en outre au moins une ferrure (17), montée sur ledit caisson de voilure (5) et à laquelle est fixée l'extrémité supérieure de ladite contrefiche (9i) traversant ledit palier glissant (13).

3. Aéronef selon la revendication 2,
**caractérisé en ce que** l'extrémité supérieure de ladite contrefiche (9i) comporte un tourillon (14) traversant au moins partiellement, ledit palier glissant (13) et fixé, à l'une des ses extrémités, à ladite ferrure (17).

4. Aéronef selon l'une quelconque des revendications 1 à 3, **caractérisé en ce qu'**il comporte au moins un train d'atterrissage (1 i) sous chacune de ses ailes.

5. Aéronef selon l'une quelconque des revendications 1 à 4, **caractérisé en ce que** ledit longeron (4) est agencé dans la partie arrière de ladite aile (3).

6. Aéronef selon l'une quelconque des revendications 1 à 5, **caractérisé en ce que** les ailes (3) dudit aéronef sont réalisées en matériau composite.

## Patentansprüche

1. Flugzeug mit mindestens einem einziehbaren Fahrwerk (1i), wobei das Flugzeug einen Rumpf (2), dessen Struktur (2A) einen Fahrgestellkasten (16), der dazu bestimmt ist, das Fahrwerk aufzunehmen, während es eingewogen ist, und Flügel (3) umfasst, die jeweils zumindest einen Längsträger (4) umfassen, der mit einem Flügelkasten (5) verbunden ist, der Teil der Struktur des Rumpfes (2) ist, wobei das Fahrwerk umfasst:
- einen Schaft (6), der eingerichtet ist, an seinem oberen Ende um eine Rotationsachse (R-R) geschwenkt zu werden, um zumindest eine ausgefahrene Position und eine eingezogene Position einzunehmen, und der an seinem unteren Ende mit Rollmitteln (7) versehen ist, wobei der Schaft (6) an seinem oberen Ende mit dem Längsträger (4) des Flügels (3) verbunden ist; und
- mindestens eine vordere Strebe (9i), die an ihrem unteren Ende geneigt mit dem Schaft (6) verbunden ist und an ihrem oberen Ende mit der Struktur des Rumpfes (2) durch Verbindungsmittel (13, 17) verbunden ist,
**dadurch gekennzeichnet, dass** die Verbindungsmittel ein Gleitlager (13) umfassen, das an dem Fahrgestellkasten (16) angebracht ist und durch zumindest einen Teil des oberen Endes der Strebe (9i) läuft.

2. Flugzeug nach Anspruch 1, **dadurch gekennzeichnet, dass** die Verbindungsmittel ferner mindestens einen Beschlag (17) umfassen, der an dem Flügelkasten (5) angebracht ist und an dem das obere Ende der Strebe (9i) befestigt ist, welche durch das Gleitlager (13) läuft.

3. Flugzeug nach Anspruch 2, **dadurch gekennzeichnet, dass** das obere Ende der Strebe (9i) einen Drehzapfen (14) umfasst, der zumindest teilweise durch das Gleitlager (13) läuft und an einem seiner Enden an dem Beschlag (17) befestigt ist.

4. Flugzeug nach einem der Ansprüche 1 bis 3, **dadurch gekennzeichnet, dass** es mindestens ein Fahrwerk (1i) unter jedem der Flügel umfasst.

5. Flugzeug nach einem der Ansprüche 1 bis 4, **dadurch gekennzeichnet, dass** der Längsträger (4) in dem hinteren Abschnitt des Flügels (3) angeordnet ist.

6. Flugzeug nach einem der Ansprüche 1 bis 5, **dadurch gekennzeichnet, dass** die Flügel (3) des Flugzeugs aus einem Verbundmaterial hergestellt sind.

## Claims

1. An aircraft comprising at least one retractable landing gear (1i), the aircraft comprising a fuselage (2), the structure (2A) thereof comprising a gear case (16) intended to receive said landing gear when it is retracted, and wings (3), each comprising at least one longitudinal spar (4) connected to a wing box (5) being part of the structure of said fuselage (2), said landing gear comprising:
- one leg (6) being adapted to pivot, on its upper end, around a rotation axis (R-R) to occupy at least one extended position and one retracted position and which is provided, on its lower end, with rolling means (7), said leg (6) being connected, at its upper end, to said longitudinal spar (4) of said wing (3); and
- at least one inclined front strut (9i) connected, on its lower end, to said leg (6) and connected, on its upper end, to said structure of the fuselage (2) thru connecting means (13, 17),
**characterized in that** said connecting means comprise a sliding bearing (13) mounted on said gear case (16) and crossed by at least one part of the upper end of said strut (9i).

2. The aircraft according to claim 1,
**characterized in that** said connecting means further comprise at least one fitting (17) mounted on said wing box (5) and to which the upper end of said strut (9i) crossing said sliding bearing (13) is fastened.

3. The aircraft according to claim 2,
**characterized in that** the upper end of said strut (9i) comprises a trunnion (14) crossing, at least partially, said sliding bearing (13) and fastened, on one of the ends thereof, to said fitting (17).

4. The aircraft according to any one of claims 1 to 3,
**characterized in that** it comprises at least one landing gear (1i) under each of the wings thereof.

5. The aircraft according to any one of claims 1 to 4,
**characterized in that** said spar (4) is arranged in the rear part of said wing (3).

6. The aircraft according to any one of claims 1 to 5,
**characterized in that** the wings (3) of said aircraft are made of a composite material.
